# EUROPEAN PATENT SPECIFICATION

(11) **EP 3 231 928 B1**
(45) Date of publication and mention of the grant of the patent: **15.08.2018**
(21) Application number: 16165328.2
(22) Date of filing: 14.04.2016
(51) Int. Cl.: D06F 37/22, F16F 9/54

(54) **AN IMPROVED BRACKET FOR MOUNTING A SHOCK ABSORBER TO A TUMBLER**
VERBESSERTE HALTERUNG ZUR MONTAGE EINES STOSSDÄMPFERS AN EINEM TUMBLER
SUPPORT AMÉLIORÉ POUR LE MONTAGE D'UN AMORTISSEUR DE CHOCS POUR UN SÈCHE-LINGE

(43) Date of publication of application: 18.10.2017
(73) Proprietor: Aksistem Elektromekanik Sanayi ve Ticaret Ltd. Sti., 41480 Kocaeli (TR)
(72) Inventor: KANIÖZ, Can, 41480 Kocaeli (TR)
(74) Representative: Sevinç, Erkan

(56) References cited:
- EP-A1- 0 504 619
- EP-B1- 1 709 233
- WO-A1-99/27175
- WO-A1-2009/063341
- DE-A1- 3 538 973
- US-A1- 2007 289 339

## Description

The present invention relates to an improved bracket for mounting a shock absorber to a tumbler and a shock absorber having said improved bracket. The present invention relates exclusively to a bracket for mounting a shock absorber to the tumbler of a washing machine or a spin dryer. A shock absorber is typically used for dampening vibrations received from the tumbler of a washing machine or a spin dryer during use.

The white good industry does not manufacture each and every component of the white goods and acquires same components from the manufacturer of that specific component. Shock absorbers used in the washing machines and spin dryers are one of these components, which the white good industry prefers to obtain from external sources. The connection in between the shock absorber and the parts of the white good then has to be modelled with the cooperation of all parties involved. It is known that the industry is need of a bracket which has known drawbacks.

EP 0 504 619 A1 discloses a bracket which has been widely used by the industry for long years. The bracket is made of two alike portions which are coupled to each other during assembly of the shock absorber in between the frame and the tumbler of a washing machine or a spin dryer. The bracket has a connecting piece for mounting the bracket to the frame of the machine on the one side and has a cross piece for mounting the bracket on the eye of the shock absorber on the other side of the shock absorber. Both of the connecting piece and the cross piece are formed of two portions, respectively on each of the two alike or mirror-image symmetric portions of the bracket. This bracket has known drawbacks encountered in cases where loads occur in directions transverse to the primary axis of the shock absorber. The primary axis of a shock absorber is the longitudinal axis of the tubular absorber body and/or the piston moving telescopically in said body. If high loads occur in direction transverse to the longitudinal axis, the bracket may fail to securely attach the shock absorber on either the frame side or the tumbler side. Furthermore, bracket portions may rupture if high loads occur not only in longitudinal direction but also transversal directions.

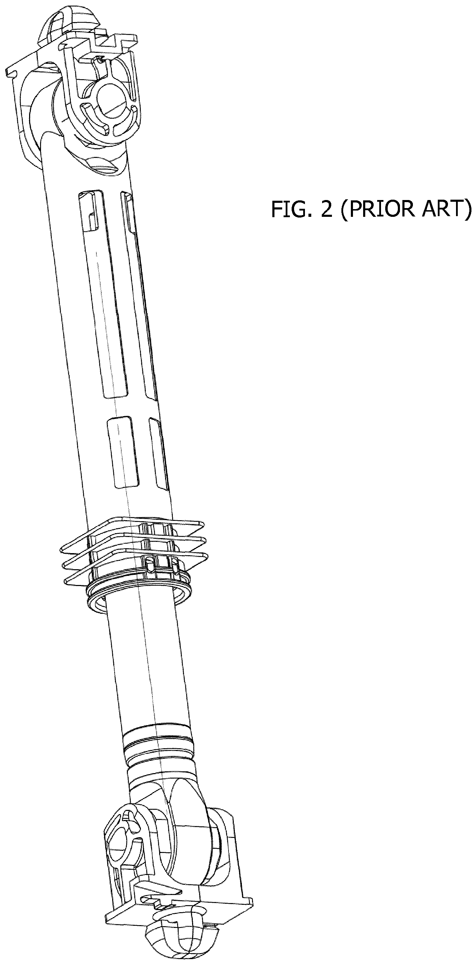

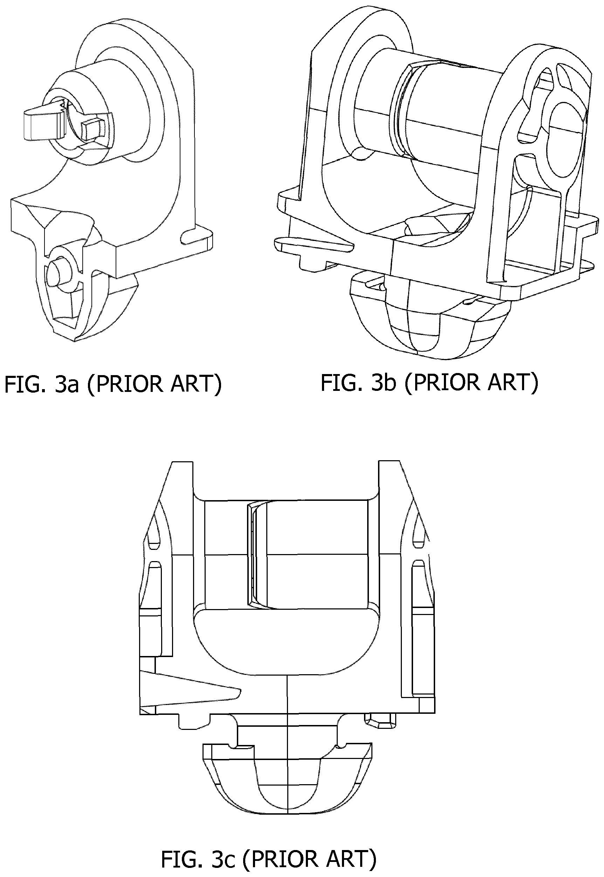

In order to mount a shock absorber to a machine, a bracket is needed at both ends of the absorber, one on the frame side and one on the tumbler side as shown in Fig. 2. The shock absorber has an eye or bushing for fixing the bracket at its both ends. Fig. 3a, 3b and 3c shows a bracket used in the industry for long years. This bracket is formed of two alike or mirror-image symmetric portions coupled to each other for forming the bracket during assembly of the shock absorber. Each portion of the bracket has a cross piece which forms a shaft to be located inside the eye or bushing of the shock absorber. Each portion of the bracket has a connecting piece which forms a generally elliptic connecting piece having a substantially circular stem. Parts of the elliptic connecting piece which protrudes from the circular stem help to secure the absorber to the tumbler.

Other shock absorber mountings are known from US2007/0289339 A, WO99/27175A, EP1 709 233 B, WO2009/063341 A and DE35 38 973 A. There is a need in the industry for an improved bracket which would function securely irrespective of whether the loads occur longitudinally or transverse to the longitudinal direction of the shock absorber.

An object of the present invention is to provide a bracket which overcomes the drawbacks known in the brackets of the prior art.

Another object of the present invention is to provide a shock absorber which remains securely fastened in between the frame and the tumbler of a washing machine or a spin dryer.

A further object of the present invention is to provide a bracket whose assembly is facilitated.

Still another object of the present invention is to provide a bracket having enhanced strength against rupture in the longitudinal direction of the shock absorber as well as in transversal directions.

The present invention relates to a bracket for mounting a shock absorber to a tumbler of a washing machine or of a spin dryer. The bracket is composed of a first portion and a second portion which form the bracket when coupled to each other. Each of the first and second portions has a base plate and a pedestal formed perpendicularly on the upper side of said base plate. Each pedestal of the first and second portions has a hollow spindle for forming a shaft to be inserted into a bushing of a shock absorber during assembly of the bracket. The hollow spindle is in the form of a cylinder having a height w1. A plurality of teeth is formed on the lower side of said base plate and each of said plurality of teeth has a stem and a lug. A support arm is formed on each of the hollow spindles, said support arm having a cross section in the form of a semi-circle and an abutment surface for leaning on the abutment surface of a corresponding support arm. Each of the hollow spindles has a cavity which is sized and shaped to accommodate the support arm of the corresponding bracket portion. It should be noted that the hollow spindle is internally reinforced by the support arm which is accommodated within the hollow spindle after assembly. Enhanced strength eliminates the risk of breakage or rupture of the bracket even under extremely high loads which may occur during unbalanced rotation of the tumbler of a washing machine or a spin dryer.

The plurality of teeth is configured to have a circular formation having a diameter (d1) measured in between the outer peripheries of the stems of two opposing tooth of said plurality of teeth. The diameter (d1) of the circular formation of the plurality of teeth is preferably larger than twice the height (w1) of an hollow spindle. As two hollow spindles form a shaft to be inserted into the bushing of a shock absorber, twice the height (w1) of a hollow spindle corresponds to the inner length (w) of the shaft section. This provides enhanced strength against forces occurring in directions transverse to the longitudinal axis of a shock absorber.

In a preferred embodiment, a locking tab is formed on the distal end of at least one of the support arms. The lug of the locking tab engages with the rear end of the abutment surface defined by the semi-cylindrical support arm. The bracket may have a further locking tab formed on the base plate of each of the first and second bracket portions. This would ensure that the first and second bracket portions would not decouple after the first mounting.

The support arm may be in the form of a semi-cylinder having a height (w2) which is equal to or larger than the height (w1) of the cylinder of the hollow spindle.

While the abutment surface of the support arm is flat in the appended drawings, the abutment surface may be made corrugated or wavy.

Preferably, the base plate, the pedestal, the hollow spindle and the support arm are integrally molded through plastic injection.

The bracket may further comprise a mounting element which has a circular cavity for receiving the plurality of teeth of the bracket and which has a plurality of apertures and ridges formed successively along the periphery of the circular cavity. The plurality of teeth of the bracket is inserted through the plurality of apertures of the mounting element and the bracket is twisted such that the lugs of the teeth lean on ridges of the mounting element for locking the bracket on said mounting element. As the bracket has the twist-lock feature, it can be easily and quickly mounted on a washing machine or a spin dryer.

The circular cavity of the mounting element has an inner diameter (d2) which is measured in between the inner tips of said ridges and which is equal to or slightly larger than the diameter d1 of the circular formation of said plurality of teeth.

At least one of the first and second bracket portions may have a locking pin which is formed on the lower side of the base plate and which fit into a fixing hole formed on the mounting element.

The mounting element has a base plate having a wall thickness which is equal to or slightly less than the height of the stem of a tooth.

The present invention relates exclusively to a bracket for mounting a shock absorber to the tumbler of a washing machine or a spin dryer and a shock absorber having said bracket.

The figures whose brief explanations are herewith provided are solely intended for providing a better understanding of the present invention and are as such not intended to define the scope of protection or the context in which said scope is interpreted in the absence of the description.
Fig. 1 shows perspective view of a tumbler mounted on the frame of a spin dryer or a washing machine using a number of shock absorbers.
Fig. 2 shows perspective view of a shock absorber, mounted at both ends, with a bracket according the prior art.
Fig. 3a shows perspective view of one bracket portion according to the prior art.
Fig. 3b shows perspective view of a bracket formed by coupled two portions according to the prior art.
Fig. 3c shows cross sectional view of the bracket according to the prior art.

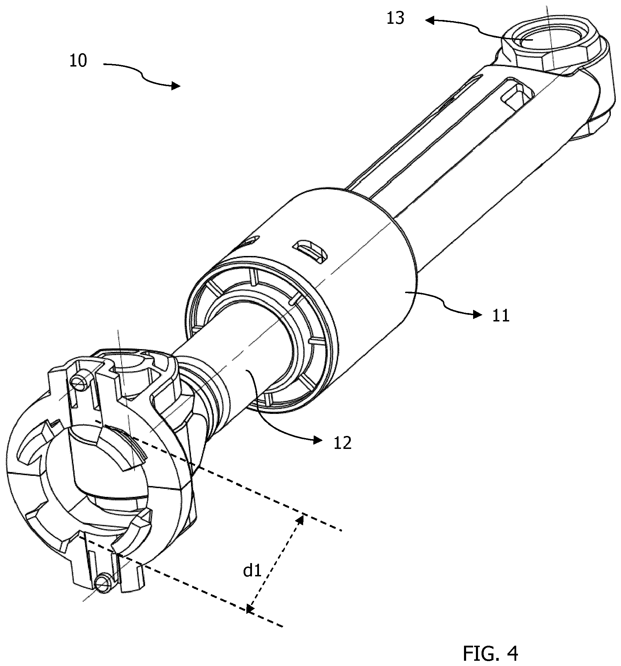

Fig. 4 shows perspective view of a shock absorber mounted at one end, with a bracket according to the present invention.
Fig. 5 shows perspective view of the first portion and the second portion of a bracket according to the present invention, in an uncoupled state.
Fig. 6 shows another perspective view of the first portion and the second portion of a bracket shown in Fig. 5.
Fig. 7 shows perspective view of a bracket portion according to the present invention.
Fig. 8 shows the rear perspective of the bracket portion of Fig. 7.
Fig. 9 shows perspective view of two bracket portions in a coupled state.
Fig. 10 shows lower perspective of the bracket of Fig. 9.
Fig. 11 shows the cross sectional view of the bracket of Fig. 9.
Fig. 12 shows an upper perspective view of bracket portion during coupling.
Fig. 13a, 13b and 13 shows, respectively, lower, side and upper views of two bracket portions of the present invention in an uncoupled state.
Fig. 14a shows the perspective view of a mounting element for mounting the shock absorber of the present invention to a tumbler of a washing machine
Fig. 14b shows the mounting element of Fig. 14a having a bracket of the present invention in the mounted state.

The list of reference numerals used in the appended drawings is as follows;
- 10: Shock absorber
- 11: Casing
- 12: Piston
- 13: Bushing
- 20: Bracket
- 21: First portion
- 22: Second portion
- 24: Pedestal
- 25: Base plate
- 26: Hollow spindle
- 28: Abutment surface
- 29: Locking tab
- 30: Tooth
- 31: Locking tab
- 32: Support arm
- 34: Locking pin
- 35: Stem
- 36: Lug
- 39: Lug cavity
- 40: Spindle cavity
- 41: Mounting element
- 42: Base plate
- 43: Fixing hole
- 44: Aperture
- 45: Ridge

While additional features and advantages of the present invention will be apparent from the detailed description, the main object of the invention is achieved in a shock absorber device as set forth in Claim 1.

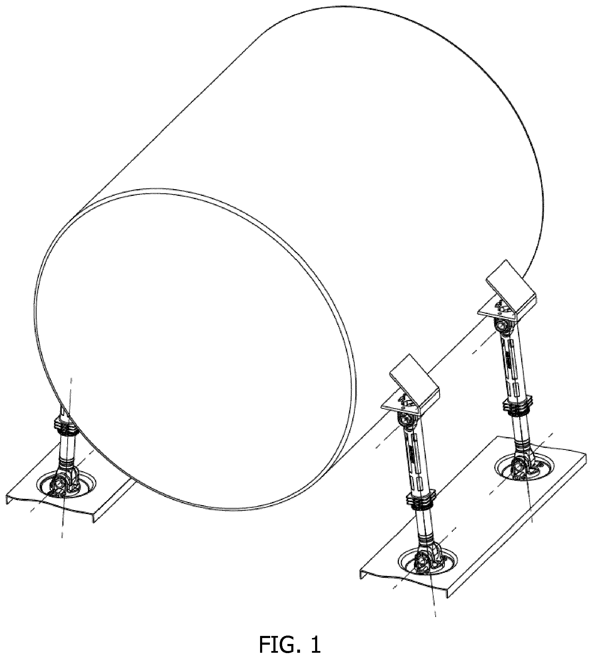

A shock absorber (10) typically comprises a casing (11) within which a piston (12) moves telescopically and dampens vibrations received from the tumbler of a washing machine or spin dryer during rotation of said tumbler. There is usually a friction element, which is located in between the piston (12) and the casing (11) of the shock absorber and which produces friction during the telescopic movement of the piston within the casing. The friction element is typically in the form of a felt which produces friction and heat as the piston (12) moves back and forth during the oscillatory movement of a tumbler. The tumbler of a washing machine or a spin dryer is mounted to the machine's frame with one or more shock absorbers as illustrated in Fig. 1.

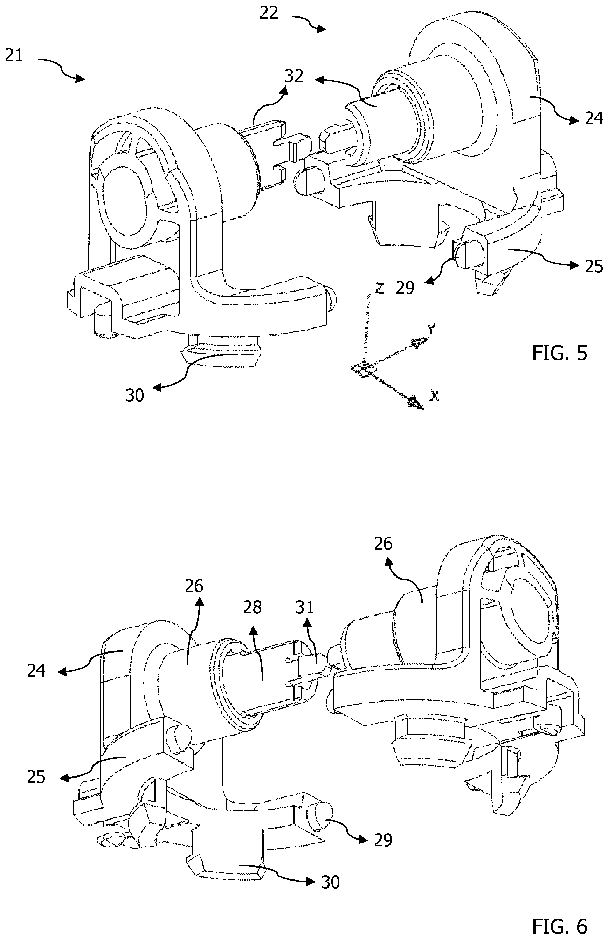

A bracket (20) according to the present invention is formed of two alike portions, the first portion (21) and the second portion (22) as illustrated in Fig. 5. Each portion (21,22) has a base plate (25) and a pedestal (24) formed integrally. The plane of the pedestal (24) is substantially perpendicular to the plane of the base plate (25). The side view of the base plate (25) and the upright pedestal (24) forms a substantially "L" shaped geometry.

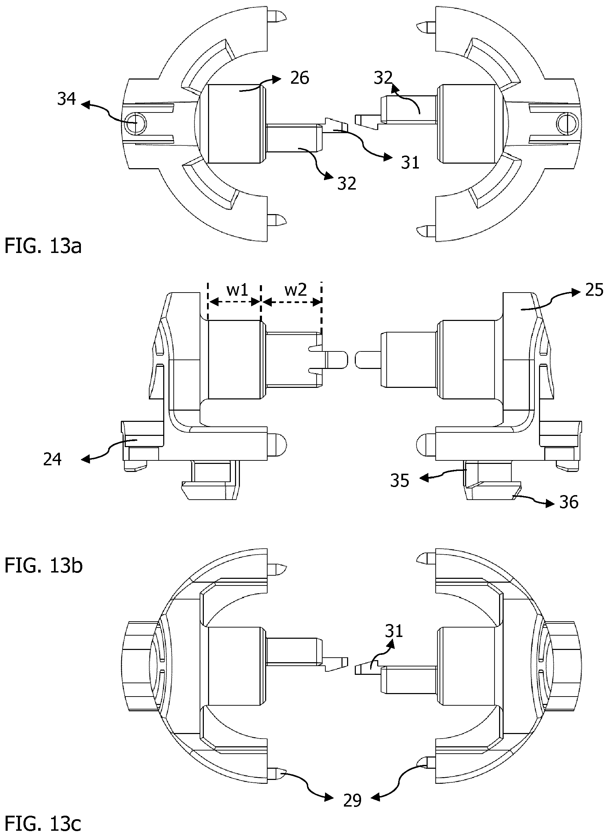

As illustrated in Fig. 6, each of the first and second portions (21,22) of the bracket (20) has a hollow spindle (26) formed integrally on each of the pedestals (24) of the two portions (21,22). The hollow spindle is in the form of a cylinder having a height designed as w1 as shown in Fig. 13b. A support arm (32) is formed in each of the hollow spindles (26) of the two portions. The support arm (32) has a cross section in the form of a semi-circle such that the when two bracket portions (21) are coupled to each other, the semi-circular support arm (32) of the first portion (21) fits into the cavity (40) not occupied by the support arm (32) of the second portion (22) in its hollow spindle (26). The hollow spindle (26) of each of the portions is hollow only to the extent that the cavity (40) in the spindle (26) is sized and shaped to receive and accommodate the support arm (32) of the other bracket portion. As the cross section of the support arm is a semi-circle, the support arm is in the form of a semi-cylinder having a height designated as w2 as shown in Fig. 13b.

As illustrated in Figs. 5 and 6, the first and second bracket portions (21,22) are mirror-image symmetric to each other. More particularly, the first portion (21) looks like the rearview mirror image of the second portion (22) such that the hollow spindle (26) and the support arm (32) of the two portions mate with each other when the portions (21,22) are coupled to each other for forming a bracket (20).

The base plate (25) of a first portion (21) has at least one locking tab (29) for engagement to the corresponding locking tab (29) formed on the base plate (25) of the second portion (22), as shown in Fig. 5 and Fig. 6. When the first and second portions (21,22) are coupled to each other, their decoupling is prevented by the engagement of the locking tabs (29) of the two portions (21,22). Furthermore, translational movement in the y-direction as shown in Fig. 5 is prevented also by the additional locking tabs (31) formed on the front end of the support arm (32) of each of the first and second portions (21,22). As depicted in Figs. 5, 6 and 7, the locking tab (31) is snap fit type and once the two portions are coupled to each other, decoupling of the two portions is prevented by the toothed snap type locking tabs (31).

With reference to Fig. 5 in combination with Fig. 6, the support arm (32) formed in the hollow spindle (26) of the first portion (21) has an abutment surface (28) for leaning on the corresponding abutment surface (28) formed on the spindle (26) of the second portion (22). While the abutment surface (28) shown in Fig. 6 is a flat surface for leaning on the flat abutment surface (28) of the corresponding second portion (22), it may also be designed to have wavy or corrugated surface. The abutment surface (28) of the first portion (21) leans on the abutment surface (28) of the second portion (22) such that transitional movement of the two portions (21,22) with respect to each other in the x-direction and in the z-direction are eliminated (Fig. 5), thereby separation of the two portions (21,22) can be prevented.

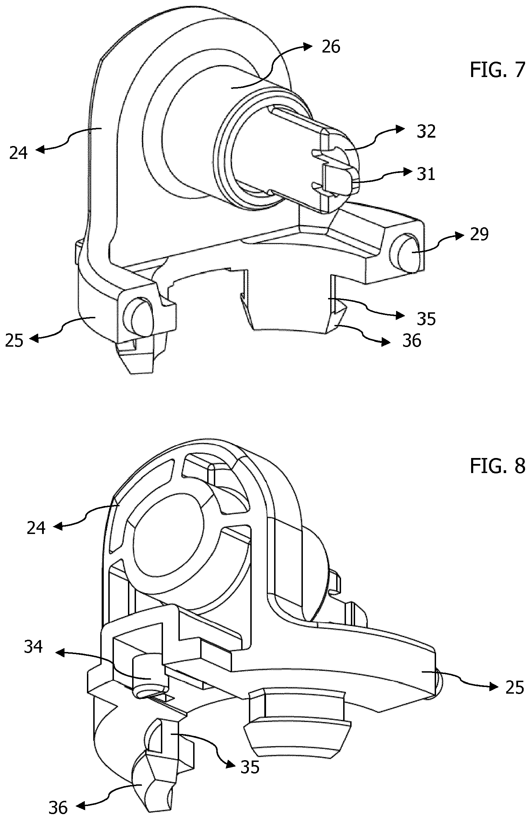

Each of the first and second bracket portions (21,22) has a plurality of teeth (30) located of lower part of their base portion (25) as illustrated in Figs. 5 and 6. The teeth are aimed to lock the bracket (20) to a mounting element (41) for fixing the bracket (20) to the frame or the tumbler of a machine. As shown in Figs. 7 and 8, a tooth (30) according to the invention has a stem (35) formed on the lower part of the base portion (25) of the first and second portions (21,22) and also a lug (36) at the distal end of said stem (35) (Figs. 6 and 7).

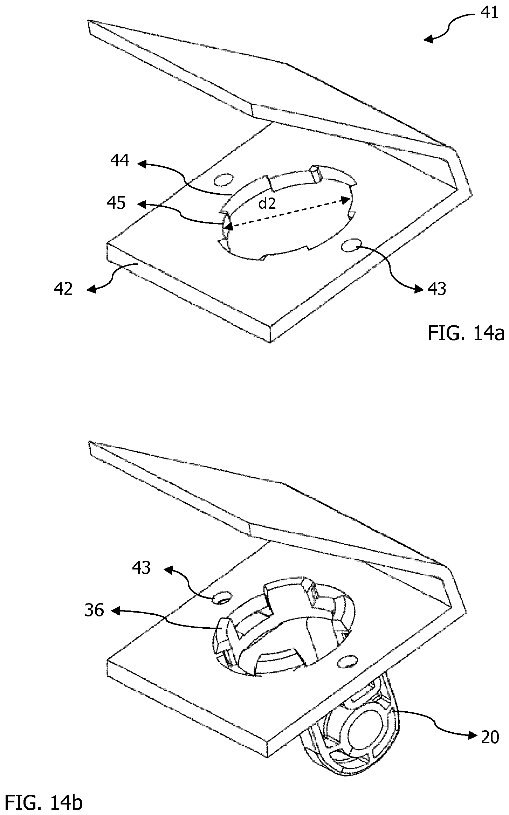

Fig. 14a shows the perspective view of a mounting element (41) for mounting the shock absorber to a frame or to a tumbler of a washing machine. In Fig. 14b, a bracket (20) is depicted in the mounted state to a mounting element (41). The mounting element has a base plate (42) whose thickness is equal to or slightly more than the height of the stem (35) of a tooth (30) of the bracket (20). As illustrated in Figs. 14a and 14b, the mounting element (41) has a circular cavity formed on its base plate (42) for mounting a bracket (20) into the same. The circular cavity has a plurality of apertures (44) for allowing a plurality of corresponding teeth (30) to be inserted in said cavity. Once the bracket (20) is inserted into the circular cavity, the bracket (20) is twisted a certain amount so that the lugs (36) of plurality of teeth (30) rotate and lean on a plurality of ridges (45) formed next to each aperture (44) of said plurality of apertures. The diameter of the circular cavity calculated from the inner tips of the ridges (45) is designated as "d2" as shown in Fig. 14a.

The lugs (36) of the teeth (30) of the bracket (20) are depicted in a twisted state in Fig. 14b, such that the lugs are now leaning on the ridges (45) of the circular cavity. As the bracket (20) is twisted, the lugs (36) of the teeth (30) secure the bracket (20) on the mounting element (41). The amount of twisting corresponds to an angle obtained by dividing the peripheral length of an aperture by the entire peripheral length of the circular cavity into which the teeth (30) of the bracket are inserted. This amount corresponds to angular share or ratio of an aperture (44) out of 360°.

As shown in Fig. 8, the first and second portion (21,22) has a locking pin (34) integrally formed on the lower part of the base plate (25) of the portions. The locking pin (34) is sized and shaped to fit into a corresponding fixing hole (43) formed on the mounting element (41) as depicted in Fig. 14a. When a bracket (20) is first inserted into the circular cavity of the mounting element (41), the locking pin (34) and the fixing hole (43) does not match. However, the bracket is twisted such that the lugs (30) slide and fully lean on the ridges (45) of the mounting element, the locking pin (34) matches the fixing hole (43) and steps into the same in order to securely keep the bracket in this locked position.

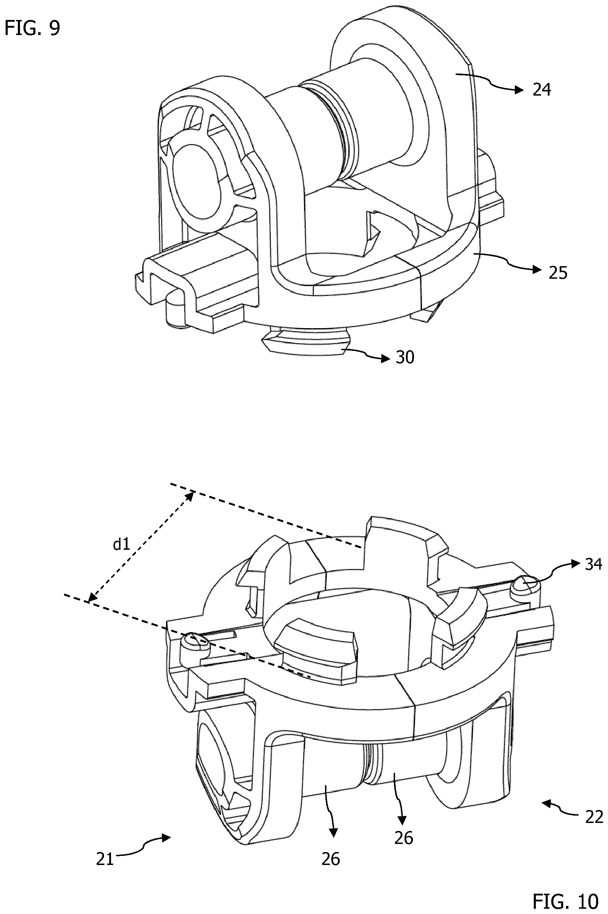

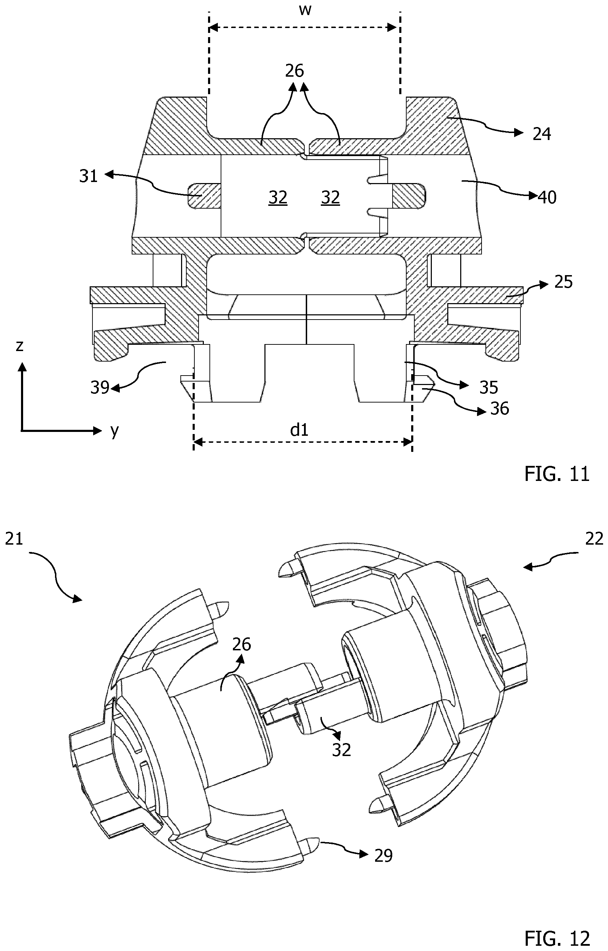

When the two bracket portions (21,22) are coupled to each other, the plurality of the teeth (30) form a circle. The diameter of this circle is measured from the stem (35) of each of the tooth (30) and designated as "d1" as shown in Fig. 10 and Fig. 11. The plurality of the teeth (30) shall stay in circular alignment for twist locking of the bracket (20). Additionally, in the coupled state of the bracket portions (21,22), the hollow spindle (26) of each of the bracket portions form the shaft which will be located inside the bushing (13) of a shock absorber (10). The sum of the lengths of the two hollow spindles (26) in the y-direction is designated as "w" as shown in Fig. 11. In a preferred embodiment of the invention, the diameter (d1) of the circle of the plurality of teeth (30) is larger than the length (w) of the spindles. This provides enhanced strength against loads occurring in directions transverse to the longitudinal axis of the shock absorber (10). Furthermore, the diameter (d1) shall be equal to or slightly less than the diameter (d2) of the circular hole formed on the mounting element (41) (Fig. 14a).

Figs. 9 and 10 show the perspective views of the bracket (20) according to the present invention. Once the first and second portions (21,22) are coupled to each other, the distal ends of both hollow spindles (26) mate with each other. Both spindles (26) form a shaft to be located into the bushing (13) of a shock absorber (10). Support arms (32) of the both of the portions (21,22) are not visible in Figs. 9 and 10 as each support arm (32) is accommodated within the spindle cavity (40) formed on the corresponding hollow spindle (26) of the other bracket portion. Each support arm (32) in this case is leaning on the other support arm (32) through abutment surfaces (28) of each of the support arms (32). The mechanical contact of the support arms (32) through the respective abutments surfaces (28) provides a reinforced connection between the portions (21,22) thereby resulting in an extremely high strength against rupture of the bracket in the assembled state. It shall be noted that a hollow spindle (26) in the coupled state of the bracket is reinforced internally by the mechanical contact of the abutment surfaces (28).

As illustrated in Fig. 11, each of the support arms (32) is inserted into the corresponding cavity (40) formed on the other portions hollow spindle (26). This connection eliminates the decoupling of the bracket portions in the x-direction and in the z-direction as depicted in Fig. 5 in combination with Fig. 11. Decoupling of the bracket portions (21,22) in the y-direction is prevented by the mechanical connection in between the locking tabs (31) of each support arm (32) as illustrated in Figs. 11 12 and Fig. 13a-b-c. The security measure in the y-direction is further reinforced by the connection in between the locking tabs (29) formed on the base plates (25) of each of the bracket portions (21,22).

The bracket portions (21,22) may be manufactured conveniently by injection molding of a plastic material. In this way, various components of the base plate (25) including the teeth (30) and the locking tabs (29) as well as various components of the pedestal including the hollow spindle (26), support arm (32) and the locking tab (31) may be formed in a very fast, reliable and inexpensive manner. Nevertheless, manufacturing may also be achieved using raw materials such as metals, alloys, ceramics or composite materials. This holds true also for the mounting element (41).

## Claims

1. A bracket (20) for mounting a shock absorber (10) to a tumbler of a washing machine or of a spin dryer, said bracket being composed of a first portion (21) and a second portion (22) which form the bracket (20) when coupled to each other,
wherein each of the first and second portions (21,22) have a base plate (25) and a pedestal (24) formed perpendicularly on the upper side of said base plate (25),
wherein each pedestal of the first and second portions (21,22) has a hollow spindle (26) for forming a shaft to be inserted into a bushing (13) of a shock absorber (10) during assembly of said bracket, said hollow spindle (26) being in the form of a cylinder having a height w1,
wherein a plurality of teeth (30) is formed on the lower side of said base plate (25), each of said plurality of teeth having a stem (35) and a lug (36),
**characterized in that**
a support arm (32) is formed on each of the hollow spindles (26), said support arm (32) having a cross section in the form of a semi-circle and an abutment surface (28) for leaning on the abutment surface (28) of a corresponding support arm (32),
each of the hollow spindles (26) has a cavity (40) which is sized and shaped to accommodate the support arm (32) of the corresponding bracket portion (21,22).

2. A bracket (20) as set forth in Claim 1 wherein said plurality of teeth (30) is configured to have a circular formation having a diameter d1 measured in between the outer peripheries of the stems (35) of two opposing tooth of the plurality of teeth (30).

3. A bracket (20) as set forth in Claim 2 wherein the diameter d1 of the circular formation of the plurality of teeth (30) is larger than twice the height w1 of the hollow spindle (26).

4. A bracket (20) as set forth in Claim 1 wherein a locking tab (31) is formed on the distal end of at least one of the support arms (32).

5. A bracket (20) as set forth in Claim 1 wherein a locking tab (29) is formed on the base plate (25) of each of the first and second bracket portions (21,22).

6. A bracket (20) as set forth in Claim 1 wherein the support arm (32) is in the form of a semi-cylinder having a height w2 which is equal to or larger than the height w1 of the cylinder of the hollow spindle (26).

7. A bracket (20) as set forth in Claim 1 wherein the abutment surface (28) of the support arm (32) is flat.

8. A bracket (20) as set forth in Claim 1 wherein the abutment surface (28) of the support arm (32) of is corrugated or wavy.

9. A bracket (20) as set forth in Claim 1 wherein the base plate (25), the pedestal (24), the hollow spindle (26) and the support arm (32) are integrally molded through plastic injection.

10. A bracket (20) as set forth in Claim 2 wherein the bracket further comprises a mounting element (41) which has a circular cavity for receiving the plurality of teeth (30) of said bracket and which has a plurality of apertures (44) and ridges (45) formed successively along the periphery of said circular cavity.

11. A bracket (20) as set forth in Claim 10 wherein the plurality of teeth (30) of the bracket is inserted through the plurality of apertures (44) of the mounting element (41) and the bracket is twisted such that the lugs (36) of the teeth (30) lean on ridges (45) of the mounting element for locking the bracket on said mounting element (41).

12. A bracket (20) as set forth in Claim 10 wherein the circular cavity of the mounting element (41) has an inner diameter d2 which is measured in between the inner tips of said ridges (45) and which is equal to or slightly larger than the diameter d1 of the circular formation of said plurality of teeth (30).

13. A bracket (20) as set forth in Claim 10 wherein at least one of the first and second bracket portions (21,22) have a locking pin (34) which is formed on the lower side of the base plate (25) and which fit into a fixing hole (43) formed on the mounting element (41).

14. A bracket (20) as set forth in Claim 10 wherein the mounting element (41) has a base plate (42) having a wall thickness which is equal to or slightly less than the height of the stem (35) of a tooth (30).

15. A shock absorber (10) comprising the bracket (20) of Claim 1.

## Patentansprüche

1. Halteklammer (20) für die Montage eines Stoßdämpfers (10) an einer Trommel einer Waschmaschine oder einer Trockenschleuder, wobei die Halteklammer aus einem ersten Abschnitt (21) und einem zweiten Abschnitt (22) besteht, welche die Klammer (20) bilden, wenn sie miteinander verbunden sind,
wobei jeder der ersten und zweiten Abschnitte (21, 22) eine Grundplatte (25) und einen Aufsatz (24) aufweisen, die von der Unterseite der Grundplatte (25) aus senkrecht ausgebildet sind, wobei jeder Aufsatz der ersten und zweiten Abschnitte (21, 22) eine hohle Spindel (26) zum Ausbilden einer Welle hat, die in eine Buchse (13) des Stoßdämpfers (10) während der Montage der Halteklammer einzusetzen ist, wobei die hohle Spindel in der Form eines Zylinders mit einer Höhe w1 vorliegt,
wobei eine Mehrzahl von Zähnen (30) an der Unterseite der Grundplatte (25) ausgebildet ist, wobei jeder aus der Mehrzahl von Zähnen einen Schaft (35) und eine Lasche (36) hat,
**dadurch gekennzeichnet, dass**
ein Halterarm (32) nach einem der hohlen Profile (26) ausgebildet ist, wobei ein Profilarm (32), der einen Querschnitt in Form eines Halbkreises und eine Anlagefläche (28) hat für das Anlegen an der Anlagefläche (28) eines entsprechenden Trägerarmes (32),
wobei jede der hohlen Spindeln (26) eine Aussparung (40) hat, die so bemessen und geformt ist, dass sie den Trägerarm (32) des betreffenden Klammerabschnittes (21, 22) aufnimmt.

2. Halteklammer (20) nach Anspruch 1, wobei die Mehrzahl von Zähnen (30) so ausgestaltet ist, dass sie eine kreisförmige Ausbildung mit einem Durchmesser d1 haben, gemessen zwischen den äußeren Umfangsflächen der Schäfte (35) zweier gegenüberliegender Zähne aus der Mehrzahl von Zähnen (30).

3. Halteklammer (20) nach Anspruch 2, wobei der Durchmesser d1 der kreisförmigen Ausbildung der Mehrzahl von Zähnen (30) größer als das Zweifache der Höhe w1 der hohlen Spindel (26) ist.

4. Halteklammer (20) nach Anspruch 1, wobei eine Verriegelungslasche (31) an dem distalen Ende des zumindest einen Trägerarms (32) ausgebildet ist.

5. Halteklammer nach Anspruch 1, wobei eine Verriegelungslasche (29) an der Grundplatte (25) jedes der ersten und zweiten Halteklammerabschnitte (21, 22) ausgebildet ist.

6. Halteklammer (20) nach Anspruch 1, wobei der Trägerarm (32) in Form eines Halbzylinders vorliegt, der eine Höhe w2 hat, die gleich oder größer als die Höhe w1 des Zylinders der hohlen Spindel (26) ist.

7. Halteklammer (20) nach Anspruch 1, wobei die Anlagefläche (28) des Stützarmes (32) flach ist.

8. Halteklammer (20) nach Anspruch 1, wobei die Anlagefläche (28) des Trägerarms (32) gewellt oder wellenförmig ist.

9. Halteklammer (20) nach Anspruch 1, wobei die Grundplatte (25), der Aufsatz (24), die hohle Spindel (26) und der Trägerarm (32) mittels Kunststoffspritzguss einstückig ausgebildet sind.

10. Halteklammer (20) nach Anspruch 2, wobei die Klammer weiterhin ein Befestigungselement (41) aufweist, das eine kreisförmige Vertiefung für die Aufnahme der Mehrzahl von Zähnen (30) der Halteklammer hat und welche eine Mehrzahl von Öffnungen (44) und Rippen in (45) hat, die aufeinander folgend entlang des Umfanges der kreisförmigen Vertiefung ausgebildet sind.

11. Halteklammer (20) nach Anspruch 10, wobei die Mehrzahl von Zähnen der Halteklammer durch die Mehrzahl von Öffnungen (44) des Befestigungselementes (41) hindurch eingesetzt ist und dass die Halteklammer verdreht ist, so dass die Laschen (36) der Zähne (30) an Rippen (45) des Befestigungselementes anliegen können, um die Halteklammer an dem Befestigungselement (41) zu sichern.

12. Halteklammer (20) nach Anspruch 10, wobei die kreisförmige Aussparung des Befestigungselementes (41) einen inneren Durchmesser d1 hat, gemessen zwischen den inneren Spitzen der Rippen (45), und welcher gleich wie oder geringfügig größer als der Durchmesser d1 der kreisförmigen Ausbildung der Mehrzahl von Zähnen (30) ist.

13. Halteklammer (20) nach Anspruch 10, wobei zumindest einer der ersten und zweiten Halteklammerabschnitte (21, 22) einen Sicherungsstift (34) hat, der an der Unterseite der Grundplatte (25) ausgebildet ist und der in eine Befestigungsbohrung (43) passt, welche an dem Befestigungselement (41) ausgebildet ist.

14. Halteklammer (20) nach Anspruch 10, wobei das Befestigungselement (41) eine Grundplatte (42) mit einer Wandstärke hat, die gleich wie oder geringfügig kleiner als die Höhe des Schaftes (35) eines Zahnes (30) ist.

15. Stoßdämpfer (10), welcher die Halteklammer (20) nach Anspruch 1 aufweist.

## Revendications

1. Support (20) pour monter un amortisseur de chocs (10) sur un tambour d'une machine à laver ou d'un sèche-linge, ledit support étant composé d'une première partie (21) et d'une seconde partie (22) qui forment le support (20) une fois accouplées l'une à l'autre,
chacune des première et seconde parties (21, 22) ayant une plaque de base (25) et un socle (24) formé perpendiculairement sur le côté supérieur de ladite plaque de base (25),
chaque socle des première et seconde parties (21, 22) ayant une broche creuse (26) pour former un arbre devant être introduit dans une bague (13) d'un amortisseur de chocs (10) pendant l'assemblage dudit support, ladite broche creuse (26) se présentant sous la forme d'un cylindre ayant une hauteur w1,
une pluralité de dents (30) étant formée sur le côté inférieur de ladite plaque de base (25), chacune de ladite pluralité de dents ayant une tige (35) et un tenon (36),
**caractérisé par le fait que**
un bras de soutien (32) est formé sur chacune des broches creuses (26), ledit bras de soutien (32) ayant une section transversale sous la forme d'un demi-cercle et une surface de butée (28) destinée à reposer sur la surface de butée (28) d'un bras de soutien correspondant (32),
chacune des broches creuses (26) a une cavité (40) qui est dimensionnée et formée pour loger le bras de soutien (32) de la partie de support correspondante (21, 22).

2. Support (20) selon la revendication 1, dans lequel ladite pluralité de dents (30) est configurée pour avoir une formation circulaire ayant un diamètre d1 mesuré entre les périphéries externes des tiges (35) de deux dents opposées parmi la pluralité de dents (30).

3. Support (20) selon la revendication 2, dans lequel le diamètre d1 de la formation circulaire de la pluralité de dents (30) est plus grand que le double de la hauteur w1 de la broche creuse (26).

4. Support (20) selon la revendication 1, dans lequel une languette de verrouillage (31) est formée sur l'extrémité distale d'au moins un des bras de soutien (32).

5. Support (20) selon la revendication 1, dans lequel une languette de verrouillage (29) est formée sur la plaque de base (25) de chacune des première et seconde parties de support (21, 22).

6. Support (20) selon la revendication 1, dans lequel le bras de soutien (32) se présente sous la forme d'un demi-cylindre ayant une hauteur w2 qui est égale ou supérieure à la hauteur w1 du cylindre de la broche creuse (26).

7. Support (20) selon la revendication 1, dans lequel la surface de butée (28) du bras de soutien (32) est plate.

8. Support (20) selon la revendication 1, dans lequel la surface de butée (28) du bras de soutien (32) est cannelée ou ondulée.

9. Support (20) selon la revendication 1, dans lequel la plaque de base (25), le socle (24), la broche creuse (26) et le bras de soutien (32) sont moulés d'une seule pièce par injection de matière plastique.

10. Support (20) selon la revendication 2, dans lequel le support comprend en outre un élément de montage (41) qui a une cavité circulaire pour recevoir la pluralité de dents (30) dudit support et qui a une pluralité d'ouvertures (44) et d'arêtes (45) formées successivement le long de la périphérie de ladite cavité circulaire.

11. Support (20) selon la revendication 10, dans lequel la pluralité de dents (30) du support est introduite à travers la pluralité d'ouvertures (44) de l'élément de montage (41), et le support est tourné de telle sorte que les tenons (36) des dents (30) reposent sur des arêtes (45) de l'élément de montage pour verrouiller le support sur ledit élément de montage (41).

12. Support (20) selon la revendication 10, dans lequel la cavité circulaire de l'élément de montage (41) a un diamètre interne d2 qui est mesuré entre les pointes internes desdites arêtes (45) et qui est égal ou légèrement supérieur au diamètre d1 de la formation circulaire de ladite pluralité de dents (30).

13. Support (20) selon la revendication 10, dans lequel au moins une des première et seconde parties de support (21, 22) a une goupille de verrouillage (34) qui est formée sur le côté inférieur de la plaque de base (25) et qui s'adapte dans un trou de fixation (43) formé sur l'élément de montage (41).

14. Support (20) selon la revendication 10, dans lequel l'élément de montage (41) a une plaque de base (42) ayant une épaisseur de paroi qui est égale ou légèrement inférieure à la hauteur de la tige (35) d'une dent (30).

15. Amortisseur de chocs (10) comprenant le support (20) selon la revendication 1.
